(19) Europäisches Patentamt / European Patent Office / Office européen des brevets

(11) **EP 2 216 361 A1**

(12) **EUROPEAN PATENT APPLICATION**
published in accordance with Art. 153(4) EPC

(43) Date of publication:
**11.08.2010 Bulletin 2010/32**

(51) Int Cl.:
***C08J 9/00*** *(2006.01)*

(21) Application number: **08855358.1**

(22) Date of filing: **15.10.2008**

(86) International application number:
**PCT/JP2008/068665**

(87) International publication number:
**WO 2009/069393 (04.06.2009 Gazette 2009/23)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.11.2007 JP 2007306249**

(71) Applicant: **Kureha Corporation**
**Chuo-ku**
**Tokyo 103-8552 (JP)**

(72) Inventors:
• **YAMANE, Kazuyuki**
**Chuo-ku**
**Tokyo 103-8552 (JP)**

• **HOKARI, Yuki**
**Nagoya-shi**
**Aichi 455-0004 (JP)**
• **ONO, Toshihiko**
**Chuo-ku**
**Tokyo 103-8552 (JP)**
• **SAITOU, Takeshi**
**Chuo-ku**
**Tokyo 103-8552 (JP)**

(74) Representative: **Beckmann, Claus**
**Kraus & Weisert**
**Patent- und Rechtsanwälte**
**Thomas-Wimmer-Ring 15**
**80539 München (DE)**

(54) **METHOD FOR MANUFACTURING POROUS POLYMER MOLDED ARTICLE**

(57) A method for manufacturing a porous polymer molded article, comprising a step of laminating a first mask with a plurality of openings formed therein and a second mask with a plurality of openings formed therein and having a mean opening diameter that is larger than the mean opening diameter of the first mask, on a polymer molded article, and a step of forming through-holes in the polymer molded article by dry etching from the second mask side.

*Fig.2*

**Description**

**Technical Field**

The present invention relates to a method for manufacturing a porous polymer molded article.

**Background Art**

Organic polymer materials are molded into various shapes such as films, fibers, sheets and particles for use in a variety of fields, according to their characteristic mechanical properties such as elastic modulus and strength, chemical properties such as solvent solubility, hydrophilicity and hydrophobicity, and thermal properties such as heat resistance. Methods of forming pores in molded articles composed of organic polymer materials are also being studied.
Patent documents 1-3, for example, disclose the use of photoresists with different patterns as masks for etching of organic polymer molded articles such as polyimide films. Also, Patent documents 4 and 5 disclose methods of forming pores in embossed sections of plastic films. In Patent document 6 there is disclosed a method of forming through-holes in a plastic sheet having a surface provided with a metal foil with an opening, by irradiation with excimer laser light. In Patent document 7 there is disclosed a method of forming micropores in a thin sheet material by fluid sound waves.

[Patent document 1] JP 09-296057 A
[Patent document 2] JP 2001-305750 A
[Patent document 3] JP 60-111243 A
[Patent document 4] JP 62-267336 A
[Patent document 5] JP 05-86216 A
[Patent document 6] JP 05-15987 A
[Patent document 7] JP 06-198598 A

**Disclosure of the Invention**

Problems to be Solved by the Invention

The methods described in Patent documents 1-3 make use of wet etching and are therefore associated with the problem of waste solvent treatment. The methods described in Patent documents 4-7 tend to entail complex steps for pore formation.
It is therefore an object of the present invention to provide a method for manufacturing a porous polymer molded article that allows formation of through-holes in polymer molded articles by a simple process, as well as porous bodies obtained by the method.

Means for Solving the Problems

The invention provides a method for manufacturing a porous polymer molded article, comprising a step of laminating a first mask with a plurality of openings formed therein, and a second mask with a plurality of openings formed therein and having a mean opening diameter that is larger than the mean opening diameter of the first mask, in that order on a polymer molded article, and a step of forming through-holes in the polymer molded article by dry etching from the second mask side.
The method for manufacturing a porous polymer molded article requires the use of two different masks with different mean opening diameters. By laminating the second mask on the first mask, it is possible to attach the first mask to the polymer molded article firmly. This can help maintain flatness of the first mask and polymer molded article during dry etching, for more effective etching in the perpendicular direction. It also allows reliable formation of through-holes of the desired size in the porous polymer molded article, based on the opening diameters of the first mask. With this production method, therefore, it is possible to form through-holes in a polymer molded article by a simple process, without the complex steps of the prior art and without generating waste liquid as with wet etching.
The polymer molded article is preferably a polymer molded article comprising polyglycolic acid. Such a polymer molded article will allow easier formation of through-holes by dry etching. Furthermore, because polyglycolic acid is a biodegradable polymer, the obtained porous polymer molded article can be used as a culture substrate for viable cells.
The dry etching in the method for manufacturing a porous polymer molded article according to the invention is preferably argon ion etching. Argon ion etching is highly suitable for etching in the perpendicular direction, and will therefore allow formation of a porous polymer molded article with through-holes having ordered etched shapes.
The invention further provides a porous body obtainable by the method for manufacturing a porous polymer molded article as described above. Such a porous body comprises fine-sized through-holes.

**Effect of the Invention**

According to the invention it is possible to provide a method for manufacturing a porous polymer molded article that allows formation of through-holes in polymer molded articles by a simple process, as well as porous bodies obtained by the method.

**Brief Description of the Drawings**

Fig. 1 is a perspective view of an embodiment of a porous polymer molded article obtained by the manufacturing method of the invention.

Fig. 2 is a process drawing showing a perspective view of an embodiment of the method for manufacturing a porous polymer molded article according to the invention.
Fig. 3 is a schematic view of a plain weave mesh.
Fig. 4 is an SEM photograph of the porous PGA film obtained in Example 1, taken from the etching front side.
Fig. 5 is an SEM photograph of the porous PGA film obtained in Example 1, taken from the etching back side.
Fig. 6 is an SEM photograph of the porous PGA film obtained in Example 2, taken from the etching front side.
Fig. 7 is an SEM photograph of the porous PGA film obtained in Example 2, taken from the etching back side.
Fig. 8 is an SEM photograph of the porous PGA film obtained in Comparative Example 1, taken from the etching front side.
Fig. 9 is an SEM photograph of the porous PGA film obtained in Comparative Example 1, taken from the etching back side.

Explanation of Symbols

1: Porous polymer molded article, 2: polymer molded article, 3: through-hole, 4: first mask, 6: second mask, 8: dry etching apparatus, 10: plain weave mesh, 12: aperture, 14: filament diameter.

**Best Modes for Carrying Out the Invention**

Preferred embodiments of the invention will now be explained in detail, with reference to the accompanying drawings as necessary. Throughout the drawings, corresponding elements will be referred to by like reference numerals and will be explained only once. Unless otherwise specified, the vertical and horizontal positional relationships are based on the positional relationships in the drawings. Also, the dimensional proportions depicted in the drawings are not necessarily limitative.
The method for manufacturing a porous polymer molded article according to the invention comprises a step of laminating a first mask with a plurality of openings formed therein, and a second mask with a plurality of openings formed therein and having a mean opening diameter that is larger than the mean opening diameter of the first mask, in that order on a polymer molded article, and a step of forming through-holes in the polymer molded article by dry etching from the second mask side.

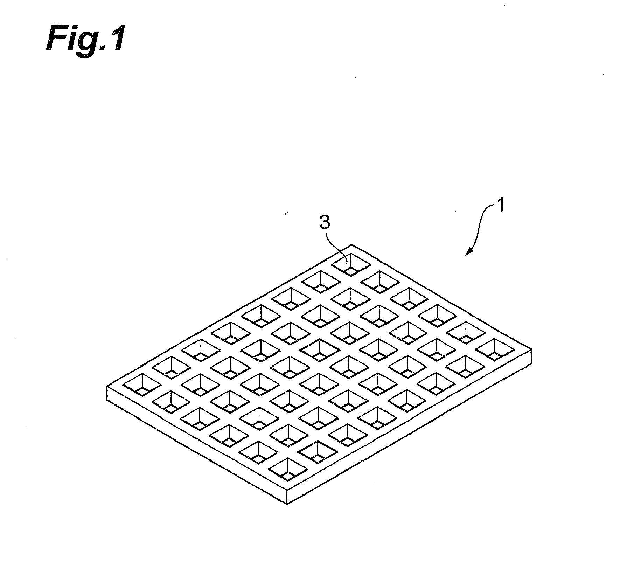

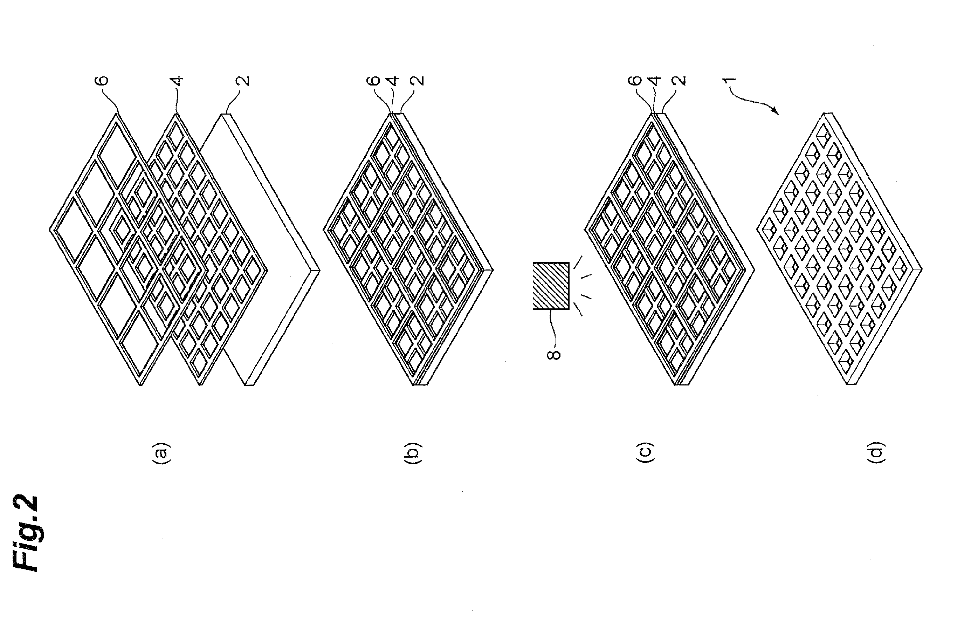

Fig. 1 is a perspective view of an embodiment of a porous polymer molded article obtained by the manufacturing method of the invention. The porous polymer molded article 1 shown in Fig. 1 is in the shape of a film, and a plurality of through-holes 3 are formed in the direction of its thickness. The through-holes 3 are independently and regularly arranged. The porous polymer molded article 1 shown in Fig. 1 can be formed by the process illustrated in Fig. 2. Fig. 2 is a process drawing showing a perspective view of an embodiment of the method for manufacturing a porous polymer molded article according to the invention. First, a polymer molded article 2, first mask 4 and second mask 6 are prepared (Fig. 2(a)). Next, the first mask 4 and second mask 6 are laminated in that order on the polymer molded article 2 (Fig. 2(b)). The second mask 6 is then irradiated with reactive gas or the like from a dry etching apparatus 8 for dry etching of the polymer molded article 2, to form through-holes in the polymer molded article 2 (Fig. 2(c)). Finally, the first and second masks are removed to produce a porous polymer molded article 1 with through-holes 3 formed therein (Fig. 2(d)).
The polymer molded article 2 is any polymer shaped into a film, sheet or board, depending on the purpose of use.
The polymer molded article 2 is more preferably in the form of a film from the viewpoint of facilitating dry etching. In this case, the film thickness is preferably 0.1-500 $\mu$m, more preferably 1-200 $\mu$m and even more preferably 2-50 $\mu$m. A polymer film thickness of less than 0.1 $\mu$m will tend to be poorly manageable, while a thickness of greater than 500 $\mu$m will tend to lengthen the etching time and hamper formation of fine-sized through-holes.
Examples for the polymer molded article 2 include polymer molded articles composed of polyimide, polyamide, polyethylene terephthalate, polycarbonate or polyglycolic acid. The polymer molded article 2 is preferably a molded article composed of polyglycolic acid, from the viewpoint of excellent dry etching properties.

Polyglycolic acid (hereunder, "PGA") contains a glycolic acid homopolymer composed entirely of repeating units of glycolic acid represented by $-(O-CH_2-CO)-$, or a glycolic acid copolymer including the aforementioned glycolic acid repeating unit. When the polyglycolic acid is a glycolic acid copolymer, the above repeating unit is included at preferably 50 wt% or greater, more preferably 75 wt% or greater, even more preferably 90 wt% or greater and most preferably 99 wt% or greater.

The glycolic acid copolymer is obtained by copolymerizing glycolic acid monomer with a comonomer, for example, a cyclic monomer such as ethylene oxalate (1,4-dioxane-2,3-dione), a lactide, a lactone (for example, β-propiolactone, β-butyrolactone, β-pivalolactone, γ-butyrolactone, δ-valerolactone, β-methyl-δ-valerolactone or ε-caprolactone), a carbonate (for example, trimethylene carbonate), an ether (for example, 1,3-dioxane), an ether ester (for example, dioxanone) or an amide (for example, ε-caprolactam); or a hydroxycarboxylic acid such as lactic acid, 3-hydroxypropanoic acid, 3-hydroxybutanoic acid, 4-hydroxybutanoic acid or 6-hydroxycaproic acid or an alkyl ester thereof; an aliphatic diol such as ethylene glycol or 1,4-butanediol; an aliphatic dicarboxylic acid such as succinic acid or adipic acid, or an alkyl ester thereof. The comonomer may be a single type or a combination of two or more types.

A plurality of openings are formed in the first mask 4 and second mask 6. According to the invention, the mean opening diameter of the second mask 6 is larger than the mean opening diameter of the first mask 4. The mean opening diameter is obtained by calculating the area of the opening formed on the surface, and determining the circular diameter of the opening area. The mean opening diameter of the second mask 6 is preferably 5-100 times, more preferably 7-60 times and even more preferably 8-20 times the mean opening diameter of the first mask 4. If the mean opening diameter of the second mask 6 is less than 5 times or greater than 100 times the mean opening diameter of the first mask 4, the effect of the invention will not be as readily exhibited.

As concrete values for the mean opening diameter, the mean opening diameter of the first mask is preferably 0.1-1000 μm and more preferably 1-100 μm. If the mean opening diameter of the first mask is less than 0.1 μm it will be difficult to form the through-holes, and if it is greater than 100 μm the formed through-holes will be too large.

The mean opening diameter of the second mask is preferably 200-5000 μm and more preferably 400-2500 μm. If the mean opening diameter of the second mask is less than 200 μm it may not be possible to obtain throughholes corresponding to the opening diameters of the first mask, and if it is greater than 5000 μm the adhesiveness between the first mask and polymer molded article will tend to be reduced.

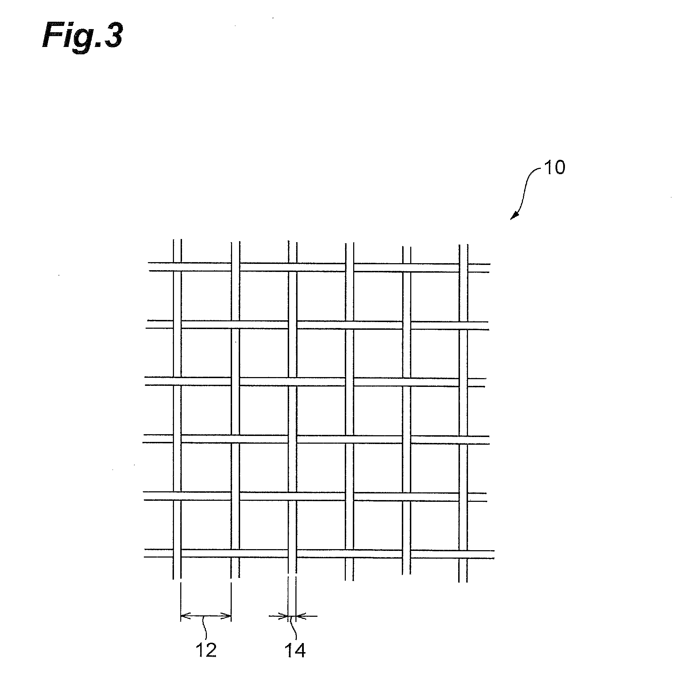

When plain weave mesh nets are used for the first and second masks, the "mesh number" may be indicated instead of the mean opening diameter. The mesh is the number of filaments of the mesh within 1 inch ($2.54 \times 10^4$ μm), and a larger mesh number corresponds to a finer mesh. Fig. 3 shows a schematic view of a plain weave mesh 10. In Fig. 3, the distance between filaments is the aperture 12, and the aperture 12 can be calculated from the mesh number and the filament diameter 14, as represented by the following formula (1). The aperture 12 roughly corresponds to the mean opening diameter, and a suitable mesh number may be selected based on the aperture.

$$\text{Aperture (μm)} = 2.54 \times 10^4/\text{mesh number - filament diameter (μm) (1)}$$

The materials for the first and second mask preferably have large etching selection ratios with the polymer molded article, and they may be appropriately selected according to the type of polymer molded article. For example, silica-based, fluorinated polymer-based, metal-based, polyester-based or polyamide-based masks may be used. According to the invention, from the viewpoint of etching selectivity, the first and second masks are preferably made of the same material and more preferably the first and second masks are metal masks of SUS or the like.

There are no particular restrictions on the thicknesses of the first and second masks, but since the second mask is used as a reinforcing material, the thickness of the second mask is preferably larger than the thickness of the first mask.

Dry etching, according to the invention, is a method of etching materials with reactive gas, ions, radicals, a polishing agent or the like. The dry etching employed may be any of various known methods, such as plasma etching, ion etching or focused ion beam etching.

Ion etching is a method of etching a solid surface using helium (He), argon (Ar), neon (Ne), or an inert gas comprising a combination of these. Reactive ion etching (RIE) is more preferred according to the invention, and argon ion etching using argon gas is even more preferred, because these allow perpendicular etching and can form throughholes with regular etching shapes.

The etching time is preferably from 30 seconds to 36 hours, more preferably from 1 minute to 14 hours and even more preferably from 1 minute to 7 hours. An etching time of shorter than 30 seconds will not easily form throughholes, while an etching time of longer than 36 hours will not be very suitable for industrial production. The degree of vacuum during etching is preferably no greater than 50 mTorr and even more preferably no greater than 40 mTorr.

Thus, according to the invention it is possible to obtain a porous body having fine-sized through-holes formed therein by a simple process employing the method for manufacturing a porous polymer molded article described above.

The invention was explained above in detail based on embodiments thereof. However, the invention is not limited to these described embodiments. The invention may also be applied in a variety of modifications so long as the gist thereof is maintained.

Examples

Preferred examples of the invention will now be explained in further detail. However, the invention is not limited to these examples.

(Example 1)

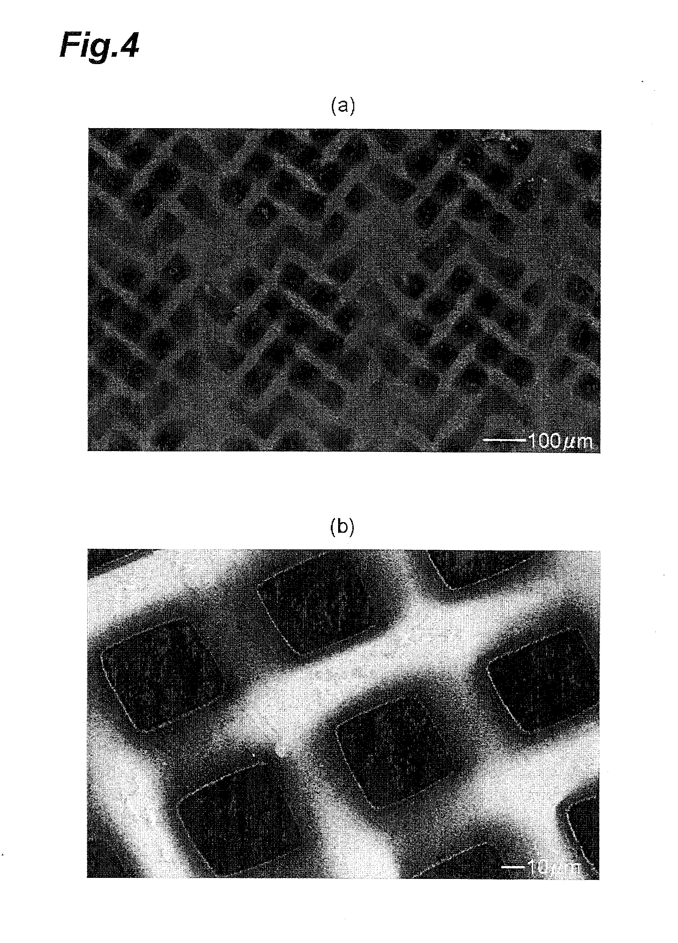

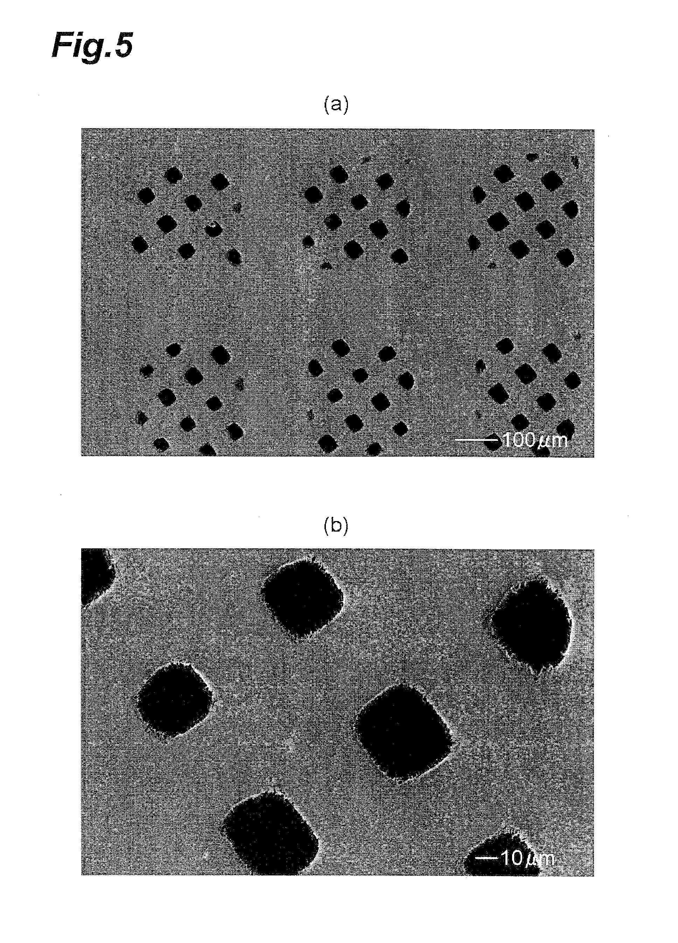

A sample was prepared by laminating a 300 mesh SUS mesh (trade name: "Twill Weave Wire Mesh" by Taiyo Wire Cloth Co., Ltd.) as the first mask and a 60 mesh SUS mesh (trade name: "Plain Weave Wire Mesh" by Taiyo Wire Cloth Co., Ltd.) as the second mask in that order on a 4 $\mu$m-thick polyglycolic acid (hereunder, "PGA") film. The sample was set in the bell jar of an etching apparatus (trade name: "IE-10" by Aikoh Engineering Co., Ltd.). After deaeration for 1 hour at approximately 6 mTorr, argon gas was injected in to adjust the degree of vacuum to about 40 mTorr (with adjustment of the argon gas injection rate for the set current value at a voltage of 1.5 kV), while the PGA film was etched for 15 minutes from above a 60 mesh SUS mesh, to fabricate a porous PGA film. Fig. 4 shows an SEM photograph of the obtained porous PGA film taken from the etching front side, and Fig. 5 shows an SEM photograph taken from the etching back side.

(Example 2)

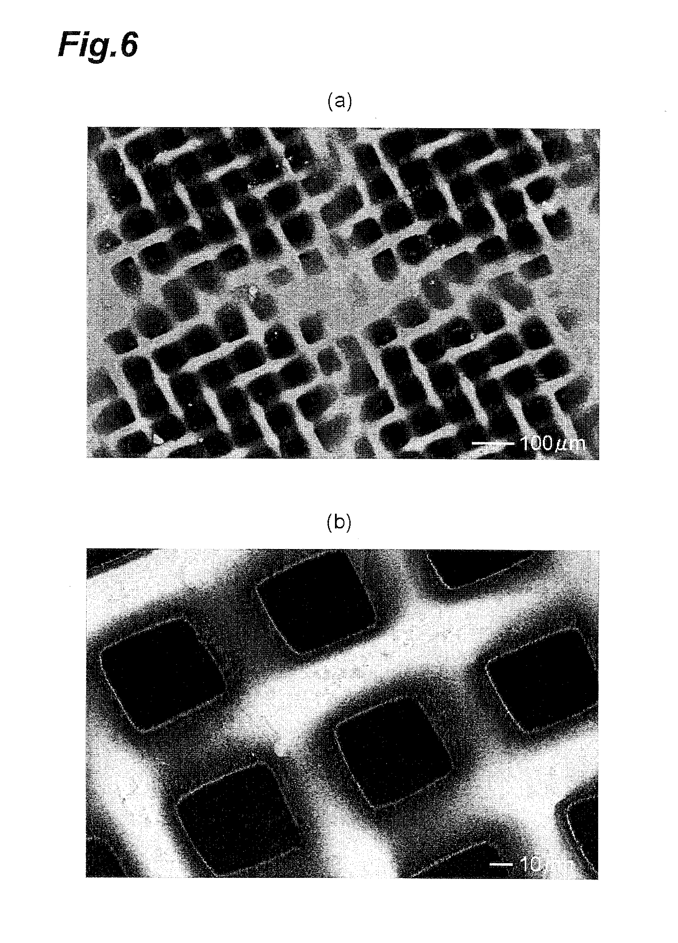

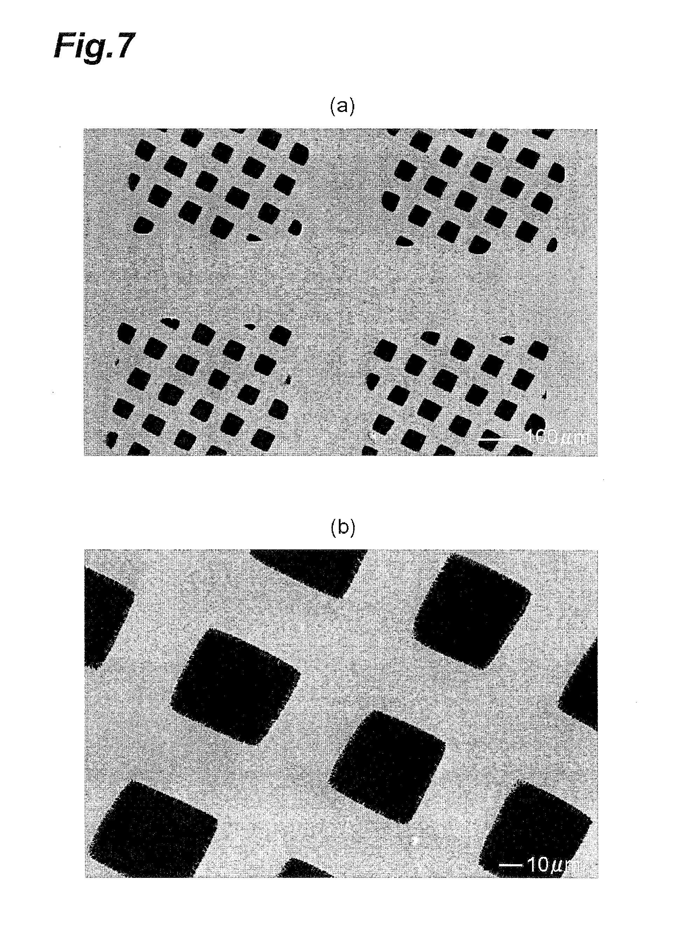

A porous PGA film was fabricated by the same procedure as Example 1, except for using a 40 mesh SUS mesh (trade name: "Plain Weave Wire Mesh" by Taiyo Wire Cloth Co., Ltd.) instead of the 60 mesh SUS mesh as the second mask, and the PGA film was etched for 20 minutes. Fig. 6 shows an SEM photograph of the obtained porous PGA film taken from the etching front side, and Fig. 7 shows an SEM photograph taken from the etching back side.

(Comparative Example 1)

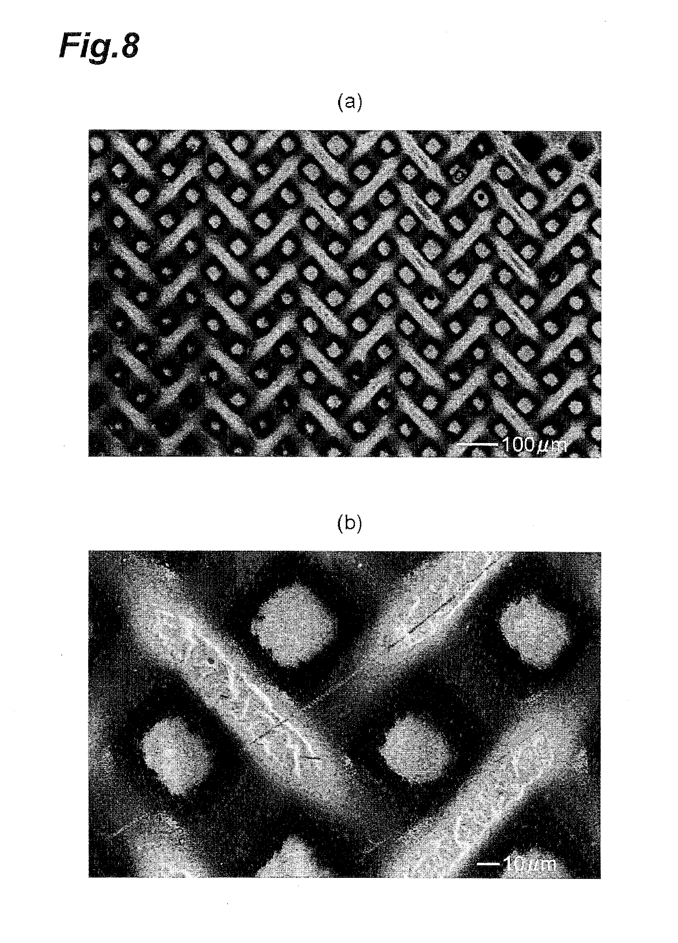

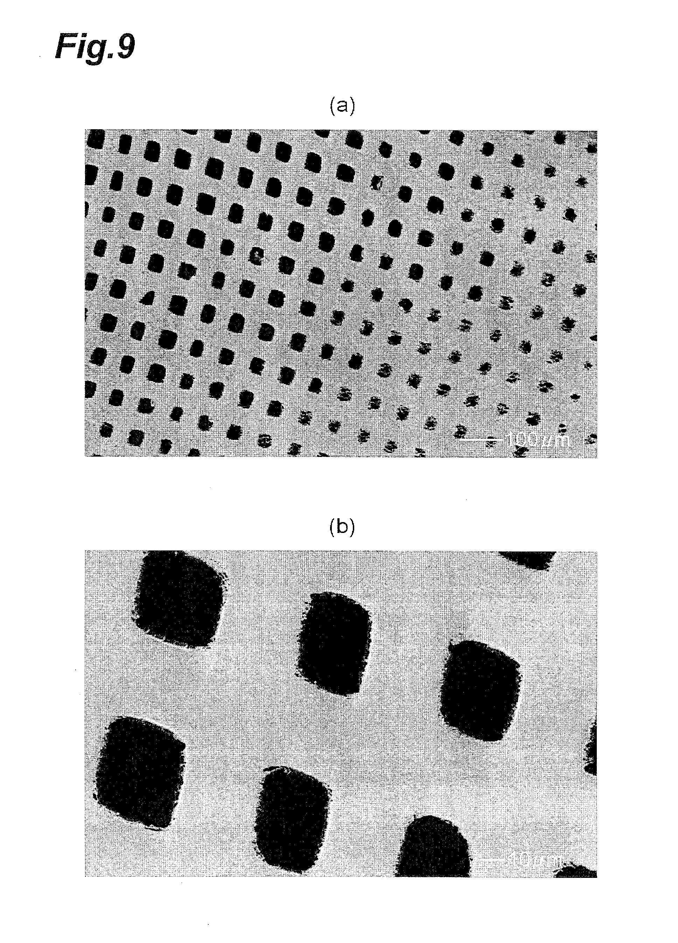

A porous PGA film was fabricated by the same procedure as Example 1, except that no 60 mesh SUS mesh was used, and the PGA film was etched for 15 minutes. Fig. 8 shows an SEM photograph of the obtained porous PGA film taken from the etching front side, and Fig. 9 shows an SEM photograph taken from the etching back side.

In Figs. 4 to 9, the image shown as (b) is a magnified view of the image shown as (a).

When Figs. 4 to 9 are compared, it is seen that through-holes corresponding to the 300 mesh openings had been formed in the porous PGA films obtained in Examples 1 and 2. However, the porous PGA film obtained in Comparative Example 1 comprised sections where through-holes corresponding to the 300 mesh openings were formed and sections where they were not formed.

This demonstrated that the method for manufacturing a porous polymer molded article according to the invention can form fine-sized through-holes in a polymer molded article by a simple process, without complex steps such as employed in photoresist processes. A porous PGA film fabricated in the manner described above can also be used as a culture substrate for viable cells or a moisture permeable waterproof material.

**Industrial Applicability**

According to the invention it is possible to provide a method for manufacturing a porous polymer molded article that allows formation of through-holes in polymer molded articles by a simple process, as well as porous bodies obtained by the method.

**Claims**

1. A method for manufacturing a porous polymer molded article, comprising:

a step of laminating a first mask with a plurality of openings formed therein, and a second mask with a plurality of openings formed therein and having a mean opening diameter that is larger than the mean opening diameter of the first mask, in that order on a polymer molded article, and
a step of forming through-holes in the polymer molded article by dry etching from the second mask side.

2. The method according to claim 1, wherein the polymer molded article is a polymer molded article composed of polyglycolic acid.

3. The method according to claim 1 or 2, wherein the dry etching is argon ion etching.

4. A porous body obtainable by the method for manufacturing a porous polymer molded article according to any one of claims 1 to 3.

*Fig.1*

# Fig.2

(a)

6
4
2

(b)

6
4
2

(c)

8

6
4
2

1

(d)

*Fig.3*

*Fig.4*

(a)

100μm

(b)

10μm

# Fig.5

(a)

—100μm

(b)

—10μm

# Fig.6

(a)

(b)

## Fig.7

(a)

(b)

## Fig.8

(a)

(b)

*Fig.9*

(a)

(b)

EP 2 216 361 A1

INTERNATIONAL SEARCH REPORT

International application No.

PCT/JP2008/068665

A. CLASSIFICATION OF SUBJECT MATTER
*C08J9/00(2006.01)i*

According to International Patent Classification (IPC) or to both national classification and IPC

B. FIELDS SEARCHED

Minimum documentation searched (classification system followed by classification symbols)
C08J9/00, B23K26/06, B29C67/20, C08J7/00

Documentation searched other than minimum documentation to the extent that such documents are included in the fields searched

| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 7-501988 A (Minnesota Mining & Manufacturing Co.), 02 March, 1995 (02.03.95), Claims; page 4, lower left column, lines 1 to 2; page 4, lower right column, line 23 to page 5, upper right column, line 2 & WO 1993/011861 A1 & EP 624114 A1 | 1-4 |
| A | JP 3-60713 A (Sumitomo Electric Industries, Ltd.), 15 March, 1991 (15.03.91), Claims; page 2, lower right column, line 4 to page 3, upper right column, line 6 (Family: none) | 1-4 |

☒ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 30 October, 2008 (30.10.08) | Date of mailing of the international search report 11 November, 2008 (11.11.08) |
|---|---|
| Name and mailing address of the ISA/ Japanese Patent Office | Authorized officer |
| Facsimile No. | Telephone No. |

Form PCT/ISA/210 (second sheet) (April 2007)

16

**INTERNATIONAL SEARCH REPORT**

International application No.

PCT/JP2008/068665

C (Continuation).    DOCUMENTS CONSIDERED TO BE RELEVANT

| Category* | Citation of document, with indication, where appropriate, of the relevant passages | Relevant to claim No. |
|---|---|---|
| A | JP 4-12243 A  (Asahi Chemical Industry Co., Ltd.), 16 January, 1992 (16.01.92), Claims; page 4, lower left column, line 19 to lower right column, line 3 (Family: none) | 1-4 |
| P,A | JP 2008-29386 A  (Toppan Printing Co., Ltd.), 14 February, 2008 (14.02.08), Full text (Family: none) | 1-4 |

Form PCT/ISA/210 (continuation of second sheet) (April 2007)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9296057 A
- JP 2001305750 A
- JP 60111243 A
- JP 62267336 A

- JP 5086216 A
- JP 5015987 A
- JP 6198598 A